# EUROPEAN PATENT SPECIFICATION

(11) **EP 3 757 473 B1**
(45) Date of publication and mention of the grant of the patent: **30.08.2023**
(21) Application number: 20181318.5
(22) Date of filing: 22.06.2020
(51) Int. Cl.: F24F 13/02, F16L 17/00, F16L 21/035, F16L 55/11, F16J 15/06, F16J 15/10, F16L 21/02

(54) **METHOD FOR FORMING A SEAL BETWEEN VENTILATION DUCTS AND/OR THEIR TERMINAL UNITS, AND COMBINATION OF A SEAL AND A CHANNEL/DUCT PART**
VERFAHREN ZUR HERSTELLUNG EINER DICHTUNG ZWISCHEN LÜFTUNGSKANÄLEN UND/ODER DEREN ANSCHLUSSEINHEITEN UND KOMBINATION AUS EINER DICHTUNG UND EINEM KANAL / LEITUNGSTEIL
PROCÉDÉ DE FORMATION D'UN JOINT ENTRE DES CONDUITS DE VENTILATION ET/OU LEURS UNITÉS TERMINALES ET COMBINATION D'UN JOINT ET D'UN CANAL/ D'UNE PIÈCE DE CONDUIT

(30) Priority: 24.06.2019 FI 20195556
(43) Date of publication of application: 30.12.2020
(73) Proprietor: FläktGroup Sweden AB, 551 84 Jönköping (SE)
(72) Inventor: Lyytinen, Oskari, 37800 Akaa (FI); Kaakinen, Antti, 37800 Toijala (FI); Järvinen, Juha, 37800 Akaa (FI)
(74) Representative: Kolster Oy Ab

(56) References cited:
- EP-A2- 2 236 768
- WO-A1-2008/139024
- JP-A- H04 302 777
- US-A1- 2018 080 557

## Description

The present invention relates to a method for forming a seal between ventilation ducts and/or their terminal units, which method involves extruding sealing compound around the perimeter of a duct part. The invention additionally relates to a combination of a seal and a channel/duct part for sealing ventilation ducts and/or joints between their terminal units.

When ventilation ducts or their terminal units are joined together so that they partly overlap, a seal surrounding the entire internal channel is needed in between. Such rubber seals are available readymade, and they may be installed over an inner duct and fastened by folding a front edge of a duct over a base of the seal. The seal has to be flexible so that it bends into the narrow gap between the parts to be joined. The invention in particular relates to channels and/or terminal units circular in cross-section, but channels having another shape, such as oblong or square, are possible, too. In the following, however, the invention will be described in connection with circular channels.

Prior art also knows a method of extruding a sealing ring out of sealing compound around a channel. The extruded seal is made by extruding sealing compound directly onto a surface of a product. Extruding takes place by rotating the product below an extrusion nozzle while the desired amount of sealing compound is dozed from a suitable nozzle onto the surface of the product. The seal is let cure to its shape, after which the product is ready for use.

WO 2008/139024 A1 discloses a method for forming a seal between ventilation ducts and/or their terminal units, which method involves extruding sealing compound around the perimeter of a channel into a continuous seal. In this known method, at least two turns of sealing compound are extruded so that a second layer is extruded over a first layer. The method produces a seal which allows a very tight seal between parts to be joined. However, the seal is rather wide and stiff, making its installation difficult, and in particular opening up the seal requires force.

It is an object of the present invention to create a method by which a seal is simple to install without, however, sacrificing the tightness of the seal. The method according to the invention is disclosed in claim 1. It is characterized by extruding sealing compound for more than a turn so that the part exceeding the turn is extruded next to the beginning of the seal, and by these adjacent seal parts being seamed together for at least the most part, and by extruding sealing compound so that it overlaps by at least 10 mm.

A preferred embodiment of the invention is characterized in that seaming takes place simultaneously with extrusion or as a separate work stage.

A second preferred embodiment of the invention is characterized by carrying out the seaming by blowing adjacent/overlapping parts together with compressed gas, such as compressed air, on one or both sides of the seal.

Yet another preferred embodiment of the invention is characterized by carrying out the seaming by blowing adjacent/overlapping parts together with a water jet on one or both sides of the seal.

Yet another preferred embodiment of the invention is characterized by extruding sealing compound so that it overlaps by appr. 10 to 50 mm, advantageously appr. 30 mm, and that at least most of this overlapping distance is seamed.

Yet another preferred embodiment of the invention is characterized by causing an upward or downward spiral on the sealing compound in connection with extrusion, which allows the beginning and end to settle adjacently without colliding.

It is an additional object of the invention to provide a combination of a seal and a channel/duct part according to claim 6.

A preferred embodiment of the inventive combination is characterized in that the extruded seal has the cross sectional shape of a substantially isosceles triangle, in which the base is significantly shorter than the sides.

A second preferred embodiment of the inventive combination is characterized

in that the seal is formed around the perimeter of the substantially circular channel or of the terminal unit.

Yet another preferred embodiment of the inventive combination is characterized in that the length of the overlapping distance is appr. 10 to 100 mm, advantageously appr. 30 mm.

As advantages of the combination according to the invention, it may be noted that the seal is appropriately high and the seam of the overlap is continuous, whereby an adequate tightness is guaranteed for the product when it is installed. Furthermore, the seal is elastic whereby installation and removal are easy.

In the following, the invention will be described in closer detail by means of the preferred embodiment, with reference to the accompanying drawings in which
Figure 1 shows a cross section of a fastening frame for a terminal unit of a ventilation apparatus, with sealing compound having been extruded around it, and the ends of the seal overlapping.
Figure 2 shows the same situation as Figure 1, but now the overlapping ends of the seal have been blown together.
Figure 3 is an axonometric view of a fastening frame and a seal extruded thereto.

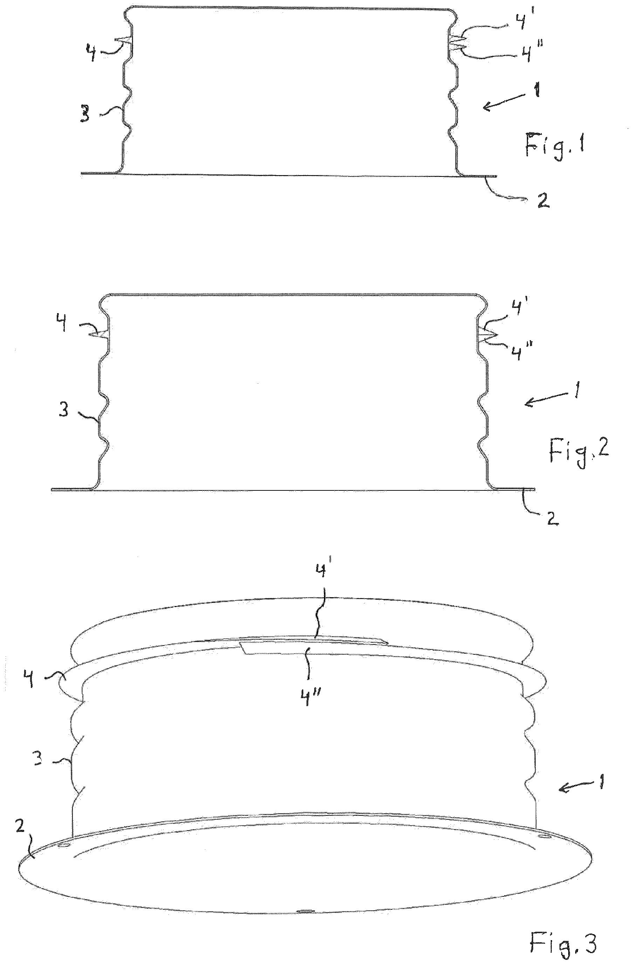

So, Figure 1 shows a fastening frame 1 whose front edge 2 is fixed to a wall and whose channel or duct part 3 is connected to a ventilation duct (not shown) by inserting the duct part provided with a seal 4 inside the ventilation duct. In the situation presented in Figure 1, slightly over one turn of seal has been extruded on the surface of the fastening frame 1 so that the beginning 4' and end 4" of extrusion settle in an overlapping manner for a distance of at least 10 mm. Overlapping is possible, because such an upward and downward spiral are introduced on the seal when it is extruded that the beginning 4' and end 4" do not collide at the overlapping point. The overlapping distance may typically be appr. 30 mm, but a longer distance is also possible, such as appr. 50 to 100 mm, usually depending on the channel size. These dimensions do not, however, limit the invention but the overlapping distance may also be longer. The overlapping point does not necessarily need to be seamed entirely, but typically at least most of the overlapping distance is seamed.

In the case of Figure 1, overlapping or adjacent seal parts 4' and 4" are for the most part separated.

Extrusion is typically carried out by rotating the channel around its longitudinal axis and at the same time extruding sealing compound on its surface. A second option is to move an extrusion head around the ventilation channel / duct part while the channel remains stationary.

The seal is seamed nearly continuous by blowing the overlapping beginning and end at the final stage of rotating (and extruding) together with compressed air (any gas mixture) or a water jet, for example. Blowing takes place simultaneously from opposite sides of the overlapping part of the seal 4 by blow nozzles. The finished seal is shown in Figures 2 and 3. Blowing may also take place from one side, only.

The seaming of overlapping parts may take place at the same time as extrusion, or as a separate work stage.

In the exemplary embodiments of the invention in the drawings, the shape of the extruded seal 4 is roughly that of an isosceles triangle in cross section, with the base significantly shorter than the sides. This has been found out to be an advantageous shape but the invention is not restricted to that and the cross sectional shape may be another one, as needed, such as oblong or round.

It is obvious for a person skilled in the art that the invention is not restricted to the examples of the preferred embodiment described above, but it may be varied withing the scope of the attached claims.

The drawings thus show the fastening frame 1 which is used in a manner known per se to install a desired terminal unit, such as an inlet or outlet valve. The fastening frame 1 is, however, only one example of the plurality of different channels and devices where a similar joint/seal arrangement may be used.

## Claims

1. A method for forming a seal (4) between ventilation ducts and/or their terminal units, which method involves extruding sealing compound around the perimeter of a duct part (3) of said ventilation ducts and/or their terminal units, **characterized by** extruding sealing compound for more than a turn so that the end part (4") exceeding the turn is extruded next to a beginning part (4') of the seal (4), and by causing an upward or downward spiral on the sealing compound in connection with extrusion, which allows the beginning (4') and end parts (4") to settle adjacently without colliding, and by seaming these adjacent beginning and end parts (4', 4") together at least for the most part, and by extruding sealing compound so that it overlaps by at least 10 mm.

2. A method as claimed in claim 1, **characterized by** carrying out seaming at the same time as the extrusion or as a separate work stage.

3. A method as claimed in claim 1 or 2, **characterized by** carrying out the seaming by blowing adjacent/overlapping beginning and end parts (4'; 4") together with compressed gas, such as compressed air, on one or both sides of the seal.

4. A method as claimed in claim 1 or 2, **characterized by** carrying out the seaming by blowing adjacent/overlapping beginning and end parts (4'; 4") together with a water jet on one or both sides of the seal.

5. A method as claimed in any one of claims 1 to 4, **characterized by** extruding sealing compound so that it overlaps by appr. 10 to 100 mm, advantageously appr. 30 mm, and by seaming at least most of this overlapping distance.

6. A combination of a seal and a channel/duct part for sealing ventilation ducts and/or joints between their terminal units, the seal (4) extending around the channel / duct part (3) and being at least partly flexible, and the seal (4) being made by extruding from a sealing compound, **characterized in that** the seal (4) consists of sealing compound extruded for more than a turn, in which the beginning (4') and end parts (4") of the seal (4) are located adjacently/overlapping, and an upward or downward spiral is caused on the sealing compound in connection with extrusion, which allows the beginning (4') and end parts (4") to settle adjacently without colliding, and the overlapping beginning and end parts (4'; 4") being seamed together for at least mostly, and **in that** the length of the overlapping distance is at least 10 mm.

7. A combination of a seal and a channel/duct part as claimed in claim 6, **characterized in that** the extruded seal (4) has the cross sectional shape of a substantially isosceles triangle, in which the base is significantly shorter than the sides.

8. A combination of a seal and a channel/terminal unit comprising a combination of a seal and a channel/duct part as claimed in claim 6 or 7, **characterized in that** the seal (4) is formed around a perimeter of the substantially circular channel or terminal unit.

9. A combination of a seal and a channel/duct part as claimed in any one of claims 6 or 7 or a combination of a seal and a channel/terminal unit as claimed in claim 8, **characterized in that** the length of the overlapping distance is appr. 10 to 100 mm, advantageously appr. 30 mm.

## Patentansprüche

1. Verfahren zum Bilden einer Dichtung (4) zwischen Lüftungsleitungen und/oder deren Anschlusseinheiten, wobei das Verfahren das Extrudieren einer Dichtungsmasse um den Umfang eines Leitungsteils (3) der Lüftungsleitungen und/oder von deren Anschlusseinheiten einschließt, **gekennzeichnet durch** Extrudieren einer Dichtungsmasse für mehr als einen Umlauf, derart, dass das Endteil (4"), das den Umlauf überschreitet, neben einem Anfangsteil (4') der Dichtung (4) extrudiert wird, und durch Anfertigen einer Spirale nach oben oder unten auf der Dichtungsmasse in Verbindung mit der Extrudierung, wodurch es erlaubt wird, dass sich das Anfangs- (4') und das Endteil (4") ohne zusammenzustoßen setzen können, und durch Verbinden dieses benachbarten Anfangs- und Endteils (4', 4") mindestens über den größten Teil und durch Extrudieren einer Dichtungsmasse derart, dass sie um mindestens 10 mm überlappt.

2. Verfahren nach Anspruch 1, **gekennzeichnet durch** Durchführen des Verbindens gleichzeitig mit der Extrudierung oder als einen separaten Arbeitsschritt.

3. Verfahren nach Anspruch 1 oder 2, **gekennzeichnet durch** Durchführen des Verbindens durch Zusammenblasen von benachbarten/überlappenden Anfangs- und Endteilen (4'; 4") mit Druckgas, wie etwa Druckluft, auf einer oder beiden Seiten der Dichtung.

4. Verfahren nach Anspruch 1 oder 2, **gekennzeichnet durch** Durchführen des Verbindens durch Zusammenblasen von benachbarten/überlappenden Anfangs- und Endteilen (4'; 4") mit einem Wasserstrahl auf einer oder beiden Seiten der Dichtung.

5. Verfahren nach einem der Ansprüche 1 bis 4, **gekennzeichnet durch** Extrudieren einer Dichtungsmasse derart, dass sie um etwa 10 bis 100 mm überlappt, vorteilhafterweise etwa 30 mm, und durch Verbinden mindestens des größten Teils dieser Überlappungsstrecke.

6. Kombination einer Dichtung und eines Kanal-/Leitungsteils zum Abdichten von Lüftungsleitungen und/oder Verbindungen zwischen deren Anschlusseinheiten, wobei sich die Dichtung (4) um das Kanal-/Leitungsteil (3) erstreckt und mindestens teilweise flexibel ist, und wobei die Dichtung (4) durch Extrudieren aus einer Dichtungsmasse hergestellt wird, **dadurch gekennzeichnet, dass** die Dichtung (4) aus einer Dichtungsmasse besteht, die für mehr als einen Umlauf extrudiert wird, wobei das Anfangs- (4') und das Endteil (4") der Dichtung (4) benachbart sind/sich überlappen, und in Verbindung mit der Extrudierung eine Spirale nach oben oder unten auf der Dichtungsmasse angefertigt wird, die es erlaubt, dass sich das Anfangs- (4') und das Endteil (4") ohne zusammenzustoßen nebeneinander setzen können, und wobei das überlappende Anfangs- und Endteil (4', 4") mindestens für den größten Teil verbunden sind, und dadurch, dass die Länge der Überlappungsstrecke mindestens 10 mm beträgt.

7. Kombination einer Dichtung eines Kanal-/Leitungsteils nach Anspruch 6, **dadurch gekennzeichnet, dass** die extrudierte Dichtung (4) die Querschnittsform eines im Wesentlichen gleichschenkligen Dreiecks aufweist, dessen Basis im Wesentlichen kürzer ist als die Seiten.

8. Kombination einer Dichtung eines Kanals bzw. einer Anschlusseinheit, die eine Kombination einer Dichtung und eines Kanal-/Leitungsteils nach Anspruch 6 oder 7 umfasst, **dadurch gekennzeichnet, dass** die Dichtung (4) um einen Umfang des im Wesentlichen kreisförmigen Kanals oder der im Wesentlichen kreisförmigen Anschlusseinheit gebildet ist.

9. Kombination einer Dichtung und eines Kanal-/Leitungsteils nach einem der Ansprüche 6 oder 7 oder Kombination einer Dichtung und eines Kanals bzw. einer Anschlusseinheit nach Anspruch 8, **dadurch gekennzeichnet, dass** die Länge der Überlappungsstrecke etwa 10 bis 100 mm beträgt, vorteilhafterweise etwa 30 mm.

## Revendications

1. Procédé pour former un joint (4) entre des conduits de ventilation et/ou leurs unités terminales, lequel procédé implique l'étape consistant à extruder le composé d'étanchéité autour du périmètre d'une partie de conduit (3) desdits conduits de ventilation et/ou de leurs unités terminales, **caractérisé par** l'étape consistant à extruder le composé d'étanchéité sur plus d'un tour de sorte que la partie de fin (4") dépassant du tour est extrudée à côté d'une partie de début (4') du joint (4) et par l'étape consistant à provoquer une spirale ascendante ou descendante sur le composé d'étanchéité par rapport à l'extrusion, ce permet aux parties de début (4') et de fin (4") de s'installer de manière adjacente sans se heurter, et par l'étape consistant à sertir ces parties de début et de fin (4', 4'') adjacentes ensemble au moins pour la majeure partie et par l'étape consistant à extruder le composé d'étanchéité de sorte qu'il chevauche d'au moins 10 mm.

2. Procédé selon la revendication 1, **caractérisé par** l'étape consistant à réaliser le sertissage en même temps que l'extrusion ou à une étape de travail séparée.

3. Procédé selon la revendication 1 ou 2, **caractérisé par** l'étape consistant à réaliser le sertissage en soufflant du gaz comprimé sur les parties de début et de fin (4', 4") adjacentes/chevauchantes, tel que de l'air comprimé, sur un ou deux côtés du joint.

4. Procédé selon la revendication 1 ou 2, **caractérisé par** l'étape consistant à réaliser le sertissage en soufflant un jet d'eau sur les parties de début et de fin (4', 4") adjacentes/chevauchantes sur un ou deux côtés du joint.

5. Procédé selon l'une quelconque des revendications 1 à 4, **caractérisé par** l'étape consistant à extruder le composé d'étanchéité de sorte qu'il chevauche d'approximativement 10 à 100 mm, de manière avantageuse d'approximativement 30 mm, et par l'étape consistant à sertir au moins la majeure partie de cette distance de chevauchement.

6. Combinaison d'un joint et d'une partie de canal/conduit pour sceller des conduits de ventilation et/ou des joints entre leurs unités terminales, le joint (4) s'étendant autour de la partie de canal/conduit (3) et étant au moins partiellement flexible, et le joint (4) est réalisé par extrusion d'un composé d'étanchéité, **caractérisé en ce que** le joint (4) se compose d'un composé d'étanchéité extrudé sur plus d'un tour, dans lequel les parties de début (4') et de fin (4") du joint (4) sont positionnées de manière adjacente/en chevauchement, et une spirale ascendante ou descendante est provoquée sur le composé d'étanchéité par rapport à l'extrusion, ce qui permet aux parties de début (4') et de fin (4") de s'installer de manière adjacente sans se heurter, et les parties de début et de fin (4' ; 4'') chevauchantes étant serties ensemble sur au moins la majeure partie, et **en ce que** la longueur de la distance de chevauchement est d'au moins 10 mm.

7. Combinaison d'un joint et d'une partie de canal/conduit selon la revendication 6, **caractérisée en ce que** le joint (4) extrudé a la forme transversale d'un triangle sensiblement isocèle, dans lequel la base est considérablement plus courte que les côtés.

8. Combinaison d'un joint et d'une partie de canal/conduit comprenant une combinaison d'un joint et d'une partie de canal/conduit selon la revendication 6 ou 7, **caractérisée en ce que** le joint (4) est formé autour d'un périmètre du canal sensiblement circulaire ou unité terminale.

9. Combinaison d'un joint et d'une partie de canal/conduit selon l'une quelconque des revendications 6 ou 7 ou une combinaison d'un joint et d'une partie de canal/conduit selon la revendication 8, **caractérisée en ce que** la longueur de la distance de chevauchement est d'approximativement 10 à 100 mm, de manière avantageuse d'approximativement 30 mm.
